# EUROPEAN PATENT SPECIFICATION

(11) **EP 0 971 581 B1**
(45) Date of publication and mention of the grant of the patent: **14.11.2007**
(21) Application number: 98909875.1
(22) Date of filing: 13.03.1998
(51) Int. Cl.: A01K 1/00, A01G 9/24, A01K 1/01

(54) **SYMBIOSIS OF SHEDS AND GREENHOUSES**
SYMBIOSE ZWISCHEN HALLEN UND GEWÄCHSHÄUSERN
SYMBIOSE ENTRE ETABLES ET SERRES

(30) Priority: 13.03.1997 NL 1005526
(43) Date of publication of application: 19.01.2000
(73) Proprietor: Van der Wijngaart, Adriaan Johannes Hubertus, NL-4841 GJ Prinsenbeek (NL)
(72) Inventor: Van der Wijngaart, Adriaan Johannes Hubertus, NL-4841 GJ Prinsenbeek (NL)
(74) Representative: Klooster, Jan Hanri
(86) International application number: PCT/NL1998/000148
(87) International publication number: WO 1998/039963

(56) References cited:
- EP-A- 0 498 084
- WO-A-80/00486
- DE-A- 3 325 913
- DE-A- 4 126 503
- FR-A- 2 388 487
- SE-B- 454 342
- US-A- 4 476 921
- US-A- 5 713 154

## Description

The invention in question concerns an integrated system for market gardening and livestock farming, in situations where at least one greenhouse is used for market gardening and one shed for keeping livestock.

In intensive livestock farming, animals such as cows, pigs, sheep, goats, chickens, animals reared for fur, etc. are accommodated on grids. The manure produced by the animals falls through the grid and is collected in an underlying pit. The collected manure consists mainly of a combination of urine and solid manure. This mixture causes ammonia emission, both inside the shed and outside if it is stored outside, which may cause acidification. Furthermore, an excessively high concentration of ammonia gas in the housing/working area is undesirable for people and animals, as this may lead to disorders and reduced growth, especially in piglets.

To solve this problem people have tried to remove the manure mixture from the shed as quickly as possible. This is done, for instance, by fitting discharge gutters which carry off any manure produced from the shed directly, as soon as possible.

Another solution to this problem was found in separating or keeping separate what the animals produce, i.e. solid and fluid manure, for instance with conveyor belts set up in a slanting position.

DE 3325913 discloses a system for market gardening and livestock farming consisting of a greenhouse but does not disclose a shed with means which serve mainly to prevent ammonia production so that ammonia containing air is sent to the green house. Furthermore ammonia in the urine water is not converted and subsequently supplied as nutrient for the plants.

EP 0498084 shows a shed for keeping livestock but ammonia containing air is not a problem because the effluent air is used for drying faeces and is not fed to a greenhouse.

WO080/00486 describes also a system for market gardening and livestock farming comprising means which remove ammonia from the effluent air from the shed. A condensate stream containing non converted ammonia is sent to the greenhouse as liquid fertilizer. The system does not comprise a buffer system for storage of heat.

US 5,713,154 describes a greenhouse comprising means which serve mainly to produce CO₂ by means of burning hydrocarbons, so this system does not reduce waste streams to the environment.

In the analysis of the shed complex it appeared that the waste products not only consist of fluid and solid manure components, but that the discharged ventilation air should also be regarded as a waste stream. This gas stream contains a high percentage of carbon dioxide, as well as a considerable amount of heat, produced by animals.

The invention, in the first version produced, provides an integrated system for greenhouse and shed, based on the surprising insight that far-reaching integration and compacting will become possible when ammonia production caused by contact between urine and solid manure in the shed is avoided. It appears that ammonia is produced in contact between urine and solid manure due to enzymatic impact. It is this ammonia production in particular that makes it difficult to introduce far-reaching integration.

If, therefore, means are fitted in the shed that ensure the immediate separation of urine and solid manure, it will become possible to reuse the various product (waste) streams from the shed without any complicated treatments (purification) being required.

The invention now provides an integrated system for market gardening and livestock farming, whereby the material streams (gas, solid matter and fluid) from the shed can be reused in a useful manner. This means that the invention provides an integrated system for market gardening and livestock farming, consisting of at least one greenhouse for market gardening and one shed for keeping livestock, with certain means being present in the shed which mainly serve to prevent the production of ammonia through contact between solid manure and urine, so that at least part of the heating and/or CO2 requirement of the greenhouse can be provided by heat and/or CO2 from the shed.

It offers the possibility of using CO2 and heat at suitable times; CO2 during periods of growth, i.e. during the day, and heat during periods of heat shortages. If desired, it is also possible to separate heat and CO2 from the stream and buffer it in a suitable manner until use is possible and required.

As the first aspect of the invention, the waste of the ventilation air from the shed is therefore used for the heating and/or the CO2 requirements of a greenhouse. This may be done directly, or after previous cleaning and/or separation of the gas stream.

The ventilation air, after purification and/or other treatment if required, is introduced into the greenhouse indirectly, in which case the heat is extracted from the gas stream by means of heat exchanging and introduced into the greenhouse. With regard to the use of CO2, it should be noted that this can be either supplied directly or stored in a buffer room, whether or not after separation from the other components of the gas stream.

In a preferred production form of the invention, the air is suctioned from the shed using at least one ventilator, which also supplies air to the greenhouse. This variant has the surprising advantage that air management in both shed and greenhouse can be regulated with relatively little energy consumption. Using such a system will give surprising optimum economic output.

In addition to integration via the air management system described above, further integration of shed and greenhouse can also be achieved by using residues which, whether or not after further reprocessing, are used in the system in both directions.

First of all, the fluid and solid manure streams from the shed can be converted, after adequate treatment, into components that are suitable for reuse in the system. An example of this is the biological processing of processable manure components in a bioreactor, e.g. a bio-membrane reactor or an algae or duckweed cultivation reactor, whereby composted solid manure, biomass, algae or duckweed is obtained, which can be combined with admixtures in the ratio required for the production of an intermediate product for feed production. For the fluid fraction, preference should be given to using a form of nitrogen binding with lower organisms such as micro-organisms or plants.

The material obtained should be produced in the correct pellet form, dried if necessary, and, very importantly, it should be sterilised, as the products to be obtained should be free from bacteria and other disease-causing components.

The fluid manure component can be processed in a bio-membrane reactor, whereby the stream is purified first through nitrification and then through denitrification. This is done in a reactor in which the micro-organism content is maintained at a high level through the use of membranes. The initial separation of the manure streams enhances the output of such biological purification of the fluid stream, which has major advantages in the compactness of the installation and its operation.

The invention is therefore also relevant to a combination of a shed provided with a manure separation system as described above and a bio-membrane reactor.

In this context, it is also possible to process solid waste components from the greenhouse, such as plant remains, in feed, possibly after yeasting.

In the construction of the shed it would be best if the fluid manure component, which preferably should be separated from the other components underneath the shed, is led to an (aeration) reactor. In this reactor, the fluid manure component is broken down amongst aerobic and anaerobic micro-organisms. After separating biomass and effluent, part of the biomass can be processed further, e.g. into feed admixtures. In general, part of the biomass is also reintroduced in the (an)aerobic purification stage. The effluent can be recirculated, after further treatment if required, to a suitable place in the integrated system.

In a different production form of the invention, it is also possible to use at least part of the fluid effluent in the integrated system, whether or not after preliminary treatment by means of water purification, for cultivating algae or duckweed. If the effluent contains sufficient hydrocarbons, as well as minerals and nitrogen compounds, this will be very suitable for use as a medium for lower organisms such as algae and duckweed. The water can also be used for the cultivation of mussels, oysters and other marine animals, as the content of salt and other minerals is such that the water can be used for this purpose. However, the toxicity of the manure component should be taken into consideration. Furthermore, if an aeration reactor is part of the system, it should be operated in such a way that the hydrocarbon and nitrogen compounds are not broken down completely into CO2 and N2. It should be noted in this context that it is also possible to use part of the heat and/or the CO2 gas from the shed as a nutrient.

In all these production forms, it may be desirable to further purify the ultimate fluid effluent, i.e. after treatments in the aeration reactor, the algae cultivation reactor, the duckweed cultivation reactor and/or with other nitrogen-binding organisms, to make it suitable for discharge into the sewerage system or as rinsing water, drinking water or cultivation water (see above). To achieve this aim, it may be desirable to install an additional water treatment system which eliminates the organic and inorganic components still present from the water. Suitable systems include, for instance, membrane filtration and biological systems such as an integrated waste water purification installation or a reed bed (heliophyte filter).

Various valuable substances can be gained from the solid manure component from the shed. This can be done in combination with waste streams from the greenhouse. It is possible, for instance, to produce a biogas by means of yeasting, which can feed a total energy power plant. It should be noted in this respect that the application of the basic principle of this invention, i.e. the separation of urine and solid manure at the source, will increase the output of the biogas installation, as the production of biogas appears to be checked by the production of ammonia. Moreover, the solid substance content in the reactor may be considerably higher, which also has a positive influence on its effectiveness and dimensions.

This invention is therefore relevant to a system consisting of a shed with a facility for separating solid and fluid manure components with a biogas installation for yeasting solid manure components.

The resulting materials can be combined, as described above, with biomass and/or algae and/or duckweed for further processing, e.g. into feed. Another possibility is to burn the composted, yeasted and/or mineralised solid manure stream or, after adding glass and/or sand, to glaze the manure, after which it can be dumped or used otherwise. An alternative application could be its use as substrate for mushroom cultivation, if necessary after relevant treatment to make the material suitable for this purpose.

A special production form of the invention involves mixing solid manure with glass powder and admixtures such as soluble glass. From this mixture pellets are formed, which are heated after drying. The organic component of the manure is burnt during this process, thus leaving porous pellets that are free from bacteria and germs.

It is also possible to burn the manure and to heat the ashes, consisting of, among other things, phosphates and minerals, together with glass and/or soluble glass and any other admixtures to a temperature of at least 650°C, thus forming a porous glass matrix from which the minerals are gradually given off. The heat that is released during burning can be put to good use.

Below, the invention is explained further on the basis of the added figures. Figure 1 is an example of the current situation of a shed. Figure 2 shows a new design of a shed in which a number of modular, box-shaped enclosures are combined. Figure 3 gives a schematic overview of a number of options for the integration of the various product streams.

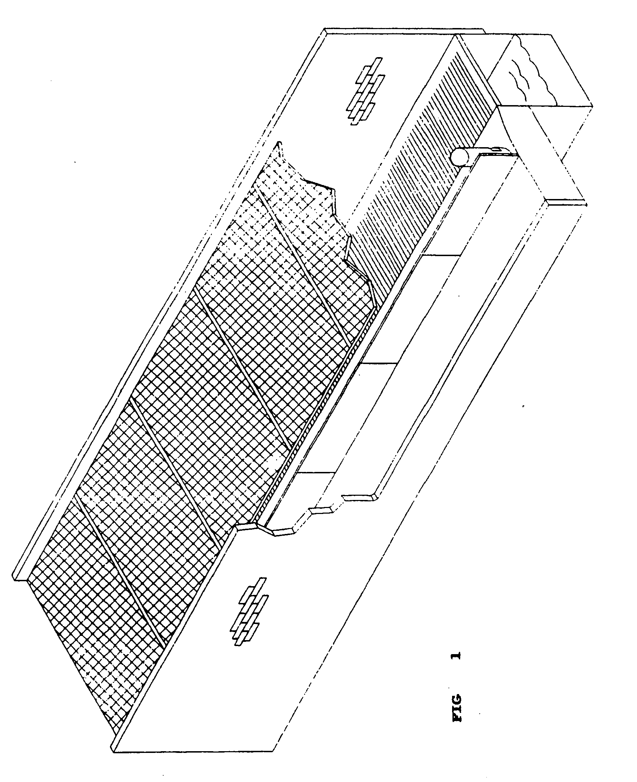

Figure 1 shows the current housing situation in a shed with manure production. A shed, so to speak, is an elongated, box-shaped space with a number of pen partitions put up at floor level. The animals are behind these partitions, standing on grids. Warm or cooled air is supplied from above and discharged lengthways above the grids.

The animals accommodated in the shed produce manure and urine, which is collected in the collecting pit underneath the grids. In the more modern systems, these products are discharged quickly from the shed with rinsing liquid to reduce ammonia emission.

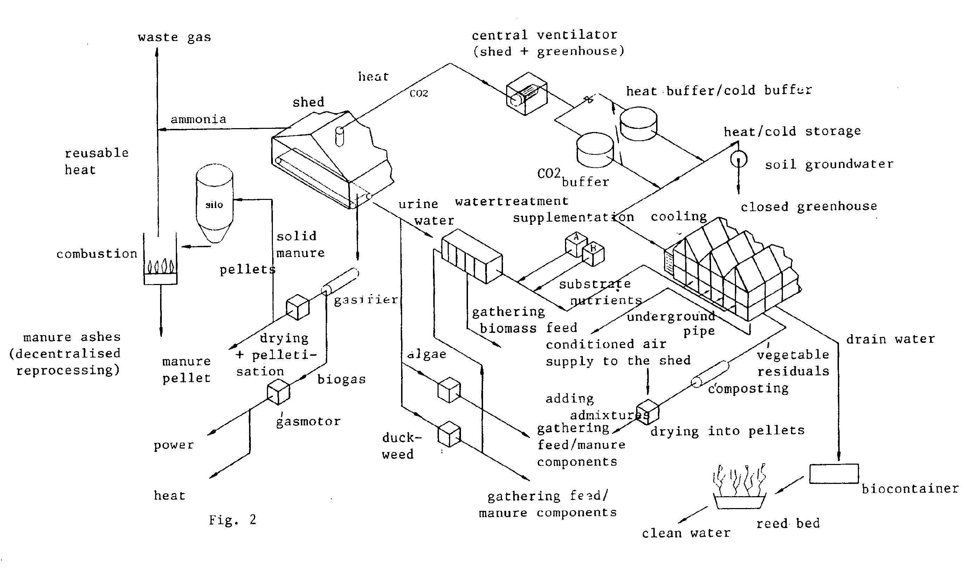

Figure 2 shows a new design of shed, in which a number of modular enclosures are combined lengthways; these enclosures are also stackable. A manure-clearing system, e.g. a conveyor belt system, is placed inside these container-shaped enclosures.

Grid floors have been put into these containers, covering their entire width and length. This grid floor, including the animals housed on the grid floor, can be rolled from the container as a complete unit. For this purpose, a second container is placed in front of the container to be emptied, and is fixed in front of the stationary container. By opening doors, the grid can then be rolled from the stationary container, and to another container if required. After this, the entire grid or the animals, depending on what is required, can then be moved.

This design also gives the option of using one or more containers for mushroom cultivation on the basis of residues from the system.

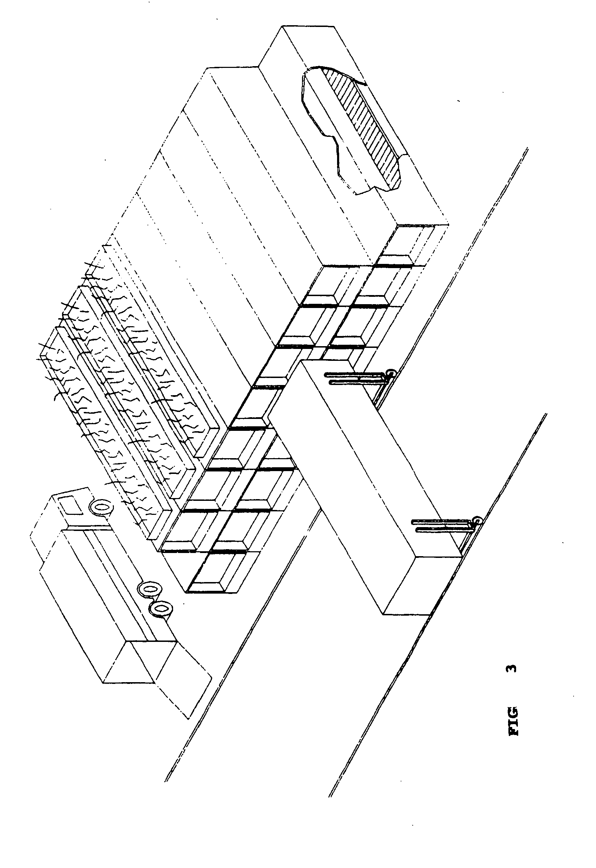

Figure 3 shows how the manure waste stream can be reused at the farm location. The ultimate production form depends on the specific choice of techniques.

In the invention, the urine running from the conveyor belt is conducted to the aeration reactor (after prior chemical-physical treatment if required). This reactor consists of two compartments separated by a partition with communicating vessels. The water enters into the non-aerated zone, and runs to the aerated compartment in a downward movement. The purified water is then separated from the biomass by means of a membrane filter. The biomass is led back to the reactor, where it is distributed among the aerated and non-aerated compartments.

After treatment of the wastewater, the biomass can either be gathered, or be partly led back to the incoming water stream. The choice depends on whether the biomass volume or the yield of the additional technical components is gathered for the preparation of feed.

The reactor for growing algae mainly consists of a flat, translucent, double-walled plate, whose walls are linked by means of partitions in such a manner that water is fed from the aeration reactor vertically through the reactor from below. Heated air, possibly suctioned from the shed, is fed into the reactor in addition, through the bottom of the reactor. The air from the shed not only contains heat, but also CO2, which offers excellent conditions for optimising algae cultivation.

At the end of the first phase of the water stream passing through the reactor, the water stream comes to a standstill for a specific period of time. After this, the second reactive route through the reactor is completed; again the water stream is fed with heat and CO2 gas.

It appears that this water contains certain hydrocarbon compounds as well as salts and nitrates. It is very suitable for use as a medium for algae. In combination with photosynthesis, algae can bind nitrates into proteins and transform the hydrocarbon compounds. Dried algae are an important nutrient. To facilitate photosynthesis, the reactor should be positioned such that it has the correct position in relation to the sun's rays shining in from the south; this could be done in such a way that it forms an integral part of the roof construction.

Collecting the water/algae mixture from the reactor will result in a mass consisting of algae, water and oxygen combined with heat. The thickness of the double-walled reactor elements determines the effectiveness of the sun's rays coming through. It appears that the reaction speed depends on the degree to which the liquid is translucent. The cleaner and thinner the layer is, the higher the algae production will be. It works as follows: The algae become attached to the base, which can be porous or have a rough surface. Under the influence of light, the algae grow and produce oxygen, while carbohydrates and proteins are being formed. For this purpose nitrates, hydrocarbons and salts are extracted from the water. The temperature in the system determines the reactivity of the algae cultivation. Under various climatic circumstances, algae cultivation will lag in periods of moderate light intensity (i.e. in the winter). Moreover, in the summer the reactor will function as a solar cell and become very hot. Therefore it should be possible to cool the reactor during the summer period. This can be done by fitting a second plate system, through which cooled liquid runs, behind the reactor. During the winter this system should be adapted so that heated liquid flows through the back plate. During the summer period, the heat produced can be used for drying the manure streams, providing the additional equipment with calorific energy, or for evaporation purposes. In the case of a cold period, heated liquid can flow through the double base at the back.

The water mentioned also contains a number of minerals which cannot be discharged directly into the sewerage system or the surface water. The objective is to produce dischargeable water which could possibly be used as rinsing or drinking water.

To achieve this aim, an additional water treatment system should be installed which eliminates any nitrogens, phosphates and potassium still present in the water. For this purpose a medium can be used which is suitable for letting reeds or bamboo varieties do their work, which requires a watery environment. Other kinds of water-loving plants, e.g. irises, can also be used effectively.

Above is a detailed description of a system, in which part of the residual streams are reprocessed on the basis of algae cultivation. Comparable systems can be set up using duckweed, marsh pennywort, water fern or any other materials yielding a product rich in protein.

Due to its composition (minerals, chemical oxygen demand) the fluid fraction of the manure is very suitable for growing duckweed, a bicellular product rich in protein which is suitable for use as a feed admixture.

A reactor for growing duckweed may consist of a tunnel-shaped greenhouse, across the bottom of which the fluid manure fraction runs. The duckweed is grown in approximately 6 weeks, while it gradually moves through the greenhouse because of the streaming fluid. The length of the greenhouse should therefore be sufficient for the production time required. The system will work optimally when there is sufficient light, heat and CO2. These components are available in sufficient quantities in the system.

Another possibility would be to fit the duckweed reactor (and/or the algae reactor) onto the shed's roof, e.g. in U-shaped gutters, which could be covered by hinging translucent cover plates. An additional advantage of this system would be that in the summer the reactor could provide additional cooling in the area below, through water evaporation, while in the winter the reactor would provide extra insulation. The translucent plates can be double-walled if required, which would have the advantage that the system could be used as an algae cultivation reactor at the same time.

Various nutrients are released in the systems described above. The solid manure from the belt separator contains a number of organic substances, which can be transformed anaerobically into methane gas. This means that biogas can be produced from a compact yeasting appliance, which can feed a total energy power plant. The energy and heat quantities produced can be put to use on the farm. The composted or yeasted and mineralised solid manure stream can now be combined as required with the biomass from the aeration reactor, and with the algae, duckweed and/or other nitrogen-binding organisms grown from the compact reactor.

Depending on the composition of the various components required an admixture can be supplemented, such as treacle, starch, spent malt or similar admixtures, in such a way that nutritious mass is produced which also causes shrinkage. This means that strands can be produced using a small pellet mincing machine, which can be dried further afterwards. Drying can take place by means of dry air, or by using a high-frequency field in combination with hot air.

If an additional unit is added, in which case the pellets are maintained at a temperature of 123°C for a number of minutes, the pellets will also be sterilised, and will therefore contain no harmful bacteria that would have a harmful effect on the animals' health.

Research has shown that waste in a shed does not remain limited to manure streams; in the shed investigated the animals also produced a considerable amount of CO2. A pig with a weight of 100 kg, for instance, will produce approximately 52.8 g of CO2 per hour, as well as a certain amount of heat. The waste streams mentioned cause a greenhouse effect in the environment.

For growing vegetables under glass, an environment rich in CO2 is consciously aimed for. Approximately 10.96 g/m² per day of CO2 is needed to produce biomass. This amount of CO2 is produced additionally by burning fossil fuels and blowing the gas directly into the greenhouse.

Given the fact that the CO2 concentration is not required for the entire day, CO2 will be required only about 40% of the time if no assimilation lighting is used.

By feeding the waste stream of the sheds into the supply streams of a greenhouse, both the amount of heat and the amount of CO2 can be put to use without using greenhouse effect inducing systems on two fronts. If required, the heat can be converted into electricity, which can be put to use in the system.

When a closed greenhouse system is chosen, a very effective cultivation method may be the result. No waste streams are created in these systems, and the water balance will be excellent. During the summer period effective cooling will have to be applied, based on a high-yield evaporation system. Another possibility is to fit the glass with heat-resisting material. Furthermore, provision can be made for regulating the heat intake in the greenhouse, depending on the heat required and the heat supplied.

The use of waste gas from sheds in greenhouses is not limited to closed greenhouses. Conventional greenhouses can also be combined with sheds. As extra symbiosis, there is the option of conditioning the sucked-in air intended for the sheds by means of heat exchangers, by allowing air to run through the greenhouse before it is led to the sheds. Any dust and germs should be removed from the flow of air from the sheds. A intermediate system of washing/filtration could provide a solution.

When a shed is linked to a greenhouse complex, an alternative option would be to condition the manure waste streams from the shed, using the nutrients from the shed in such a way that, applying the systems described above, a medium is created which is suitable for use in the greenhouses. As indicated above, the solid manure components can be reused by means of a different process, or they can be used as mediums or compost, in which case the composted manure is mixed with coconut fibre or other nutritious natural products. Coconut fibre regulates humidity. Other types of fibre can also be used. It is also possible to use the glazed pellets described above in the system in accordance with the invention.

## Claims

1. Integrated system for market gardening and livestock farming, consisting at least of a greenhouse for market gardening and a shed for keeping livestock, whereby waste products of the shed are used in the greenhouse;
- the ventilation air from the shed is supplied to the greenhouse so that the heat and CO₂ produced in the shed is used in the greenhouse;
- the heat produced in the shed is extracted from the gas stream by means of heat exchanging and introduced into the greenhouse,
**characterised in:**
- the shed comprising means which serve mainly to prevent ammonia production through contact between solid manure and urine.

2. System according to claim 1, **characterised in that**, the means referred to consist of a separation system for separating solid and fluid components, which is fitted underneath the compartment for the animals.

3. System according to claim 1 or 2, **characterised in that**, heated air from the shed is supplied to the greenhouse mentioned after cleaning and/or conditioning.

4. System according of any one of claims 1-3, **characterised in that**, the air from the shed is suctioned out by at least one ventilator, which also regulates the air supply to the greenhouse.

5. System according to any of claims 1-4, **characterised in that**, one or more waste streams from the greenhouse are used directly or indirectly in the shed.

6. System according to claim 5, **characterised in that**, vegetables and or fruit residues from the greenhouse are used as feed for the livestock immediately after composting.

7. System according to any one of claims 1-6, **characterised in that**, the air extracted from the shed is purified and, after storage in a buffer if required, supplied to the greenhouse.

8. System according to claim 7, **characterised in that**, the purification referred to takes place by means of filtration.

9. System according to claim 2, **characterised in that** the fluid fraction is treated so as to adapt its composition to the requirements for using it as substrate nutrients in the greenhouse.

10. System according to claim 9, **characterised in that** at least part of the fluid fraction is treated by using algae and/or duckweed.

11. System according to claim 9 or 10, **characterised in that**, the fluid fraction is purified bacterially and/or chemically.

12. System according to claim 11, **characterised in that**, condensation is collected and re-used.

13. System according to one or more of the above claims, **characterised in that**, one or more product streams, such as those of algae, duckweed, biomass and/or solid composted manure, possibly in combination with other components, are used as feed.

14. System according to claims 1-13, **characterised in that**, solid manure components, whether or not after preliminary treatment (yeasting, composting, mineralising), are mixed with glass powder and possibly other admixtures to form a mixture which is then transformed into porous glass pellets.

15. Integrated system according to anyone of the claims 1 - 14, **characterized in that** the shed is a modular shed system consisting of two or more stackable modular enclosures provided with means for housing animals and discharging fluid and solid manure.

## Patentansprüche

1. Integriertes System für Markt-Gemüseanbau und Viehhaltung, welches wenigstens aus einem Gewächshaus für den Markt-Gemüseanbau und einer Halle zur Viehhaltung besteht, wobei Abfallprodukte der Halle im Gewächshaus verwendet werden;
- die Entlüftungsluft von der Halle derart zu dem Gewächshaus geführt wird, dass die Wärme und das CO₂, die in der Halle erzeugt werden, im Gewächshaus verwendet werden;
- die Wärme, die in der Halle erzeugt wird, mittels Wärmeaustausch aus dem Gasstrom entzogen wird und in das Gewächshaus geleitet wird,
**dadurch gekennzeichnet, dass**:
- die Halle Mittel enthält, welche hauptsächlich dazu dienen, Ammoniakproduktion durch den Kontakt zwischen festem Mist und Urin zu verhindern.

2. System nach Anspruch 1, **dadurch gekennzeichnet, dass** die erwähnten Mittel aus einem Trennsystem zum Trennen von festen und flüssigen Bestandteilen bestehen, welches unterhalb des Abteils für die Tiere angeordnet ist.

3. System nach Anspruch 1 oder 2, **dadurch gekennzeichnet, dass** erwärmte Luft von der Halle nach dem Reinigen und/oder Aufbereiten zu dem erwähnten Gewächshaus zugeführt wird.

4. System nach einem der Ansprüche 1-3, **dadurch gekennzeichnet, dass** die Luft von der Halle durch wenigstens einen Ventilator herausgesaugt wird, welcher auch die Luftzufuhr zu dem Gewächshaus reguliert.

5. System nach einem der Ansprüche 1-4, **dadurch gekennzeichnet, dass** ein oder mehrere Abfallströme aus dem Gewächshaus direkt oder indirekt in der Halle verwendet werden.

6. System nach Anspruch 5, **dadurch gekennzeichnet, dass** Gemüse- oder Obstreste aus dem Gewächshaus unmittelbar nach dem Wegwerfen als Futter für das Vieh verwendet werden.

7. System nach einem der Ansprüche 1-6, **dadurch gekennzeichnet, dass** die Luft, die aus der Halle gesaugt wird, gereinigt und, falls erforderlich nach Lagerung in einem Pufferspeicher, zu dem Gewächshaus zugeführt wird.

8. System nach Anspruch 7, **dadurch gekennzeichnet, dass** die erwähnte Reinigung mittels Filtration stattfindet.

9. System nach Anspruch 2, **dadurch gekennzeichnet, dass** die flüssige Fraktion derart behandelt wird, dass ihre Zusammensetzung an die Anforderungen zur Verwendung als Nährstoffsubstrat im Gewächshaus angepasst wird.

10. System nach Anspruch 9, **dadurch gekennzeichnet, dass** wenigstens ein Teil der flüssigen Fraktion durch Verwendung von Algen und/oder Wasserlinsen behandelt wird.

11. System nach Anspruch 9 oder 10, **dadurch gekennzeichnet, dass** die flüssige Fraktion bakteriell und/oder chemisch gereinigt wird.

12. System nach Anspruch 11, **dadurch gekennzeichnet, dass** Kondensat gesammelt und wiederverwendet wird.

13. System nach einem oder mehreren der oben angeführten Ansprüche, **dadurch gekennzeichnet, dass** ein oder mehrere Produktströme, wie z.B. jene von Algen, Wasserlinsen, Biomasse und/oder festem kompostiertem Mist womöglich in Kombination mit anderen Komponenten als Futter verwendet werden.

14. System nach Anspruch 1-13, **dadurch gekennzeichnet, dass** feste Mistbestandteile entweder nach vorheriger Behandlung (Vergärung, Kompostierung, Mineralisierung) oder nicht mit Glaspulver und möglicherweise anderen Beimengungen vermischt werden, um eine Mischung zu bilden, welche dann zu porösen Glaspellets umgewandelt wird.

15. Integriertes System nach einem der Ansprüche 1-14, **dadurch gekennzeichnet, dass** die Halle ein modulares Hallensystem bestehend aus zwei oder mehreren stapelbaren modularen Anlagen versehen mit Mitteln zum Unterbringen von Tieren und Ausstoßen von flüssigem und festem Mist ist.

## Revendications

1. Système intégré de culture maraîchère et d'élevage de bétail, consistant en au moins une serre pour culture maraîchère et une étable pour garder du bétail, les déchets de l'étable étant utilisés dans la serre,
- l'air de ventilation de l'étable étant fourni à la serre afin que la chaleur et le CO₂ produits dans l'étable soient utilisés dans la serre,
- la chaleur produite dans l'étable est extraite du courant gazeux au moyen d'un échange de chaleur et introduit dans la serre,
**caractérisé en ce que**
- l'étable comprend des moyens qui servent principalement à empêcher la production d'ammoniac par contact entre les déjections animales solides et l'urine.

2. Système selon la revendication 1, **caractérisé en ce que** les moyens auxquels il a été fait référence consistent en un système de séparation pour séparer les composants solides et fluides qui est installé en dessous du compartiment pour les animaux.

3. Système selon la revendication 1 ou 2, **caractérisé en ce que** l'air chauffé provenant de l'étable est fourni à la serre mentionnée après nettoyage et / ou conditionnement.

4. Système selon l'un quelconque des revendications 1-3, **caractérisé en ce que** l'air provenant de l'étable est aspiré par au moins un ventilateur qui régule également la fourniture d'air à la serre.

5. Système selon l'un quelconque des revendications 1 - 4, **caractérisé en ce qu'**un ou plusieurs courants de déchets provenant de la serre sont utilisés directement ou indirectement dans l'étable.

6. Système selon la revendication 5, **caractérisé en ce que** des restes de légumes et / ou de fruits provenant de la serre sont utilisés comme aliments pour le bétail immédiatement après compostage.

7. Système selon l'un quelconque des revendications 1 - 6, **caractérisé en ce que** l'air extrait de l'étable est purifié et, après stockage dans un tampon si nécessaire, est fourni à la serre.

8. Système selon la revendication 7, **caractérisé en ce que** la purification à laquelle il est fait référence a lieu au moyen d'une filtration.

9. Système selon la revendication 2, **caractérisé en ce que** la fraction de fluides est traitée de manière à adapter sa composition aux conditions requises pour l'utiliser comme nutriments de substrat dans la serre.

10. Système selon la revendication 9, **caractérisé en ce qu'**au moins une partie de la fraction de fluides est traitée en utilisant des algues et / ou des lentilles d'eau.

11. Système selon la revendication 9 ou 10, **caractérisé en ce que** la fraction de fluides est bactériellement et / ou chimiquement purifiée.

12. Système selon la revendication 11, **caractérisé en ce que** la condensation est collectée et réutilisée.

13. Système selon une ou plusieurs des revendications ci-dessus, **caractérisé en ce qu'**un ou plusieurs courants de produit, tels que ceux d'algues, de lentilles d'eau, de biomasse et / ou de déjections animales solides compostées, éventuellement combinés avec d'autres composants, sont utilisés comme aliments.

14. Système selon les revendications 1 -13, **caractérisé en ce que** des composants de déjections animales solides sont mélangés, que ce soit ou non après traitement préliminaire (fermentation, compostage, minéralisation) avec de la poudre de verre et éventuellement d'autres adjuvants pour former un mélange qui est alors transformé en granulés de verre poreux.

15. Système intégré selon l'une quelconque des revendications 1 - 14, **caractérisé en ce que** l'étable est un système d'étable modulaire consistant en deux ou plus de deux enceintes modulaires empilables pourvues de moyens pour loger des animaux et décharger du fluide et des déjections animales solides.
